# EUROPEAN PATENT APPLICATION

(11) **EP 4 624 536 A1**
(43) Date of publication of application: **01.10.2025**
(21) Application number: 23893979.7
(22) Date of filing: 23.11.2023
(51) Int. Cl.: C09D 11/101, C09D 11/30

(54) **CATIONIC PHOTOCURABLE COMPOSITION FOR INK, AND USE THEREOF**

(30) Priority: 24.11.2022 CN 202211482475
(71) Applicant: Changzhou Tronly New Electronic Materials Co., Ltd., Jiangsu 213011 (CN)
(72) Inventor: QIAN, Bin, Changzhou, Jiangsu 213100 (CN)
(74) Representative: Bohest AG
(86) International application number: PCT/CN2023/133736
(87) International publication number: WO 2024/109890

(57) **Abstract**

Provided in the present invention are a cationic photocurable composition for ink, and the use thereof. The composition comprises: a cationic polymerizable compound, a cationic initiator and a pigment, wherein the cationic polymerizable compound comprises a compound A-1 and a compound A-2; the structural formula of the compound A-1 is formula 1: 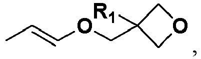 where R1 represents methyl or ethyl; the compound A-2 is a vinyl-free polymerizable monomer having a molecular weight of less than 300, and the molecular weight of oxygen in the molecule accounts for 12-30% of the molecular weight of the compound; and the sum of the content of the compound A-1 and the compound A-2 accounts for 40 wt% to 90 wt% of the total content of the composition, and the weight ratio of the compound A-1 to the compound A-2 is 8 : 1 to 1 : 5. When used as the main component of an ink, the composition can effectively mitigate the problem of a cationic polymerizable ink easily blocking a nozzle, and especially has a significant effect on a high-precision nozzle; and the pattern formed therefrom after curing is clear and uniform, and has good appearance performance.

## Description

### TECHNICAL FIELD

The present invention relates to the technical field of photocuring, and specifically relates to a cationic photocurable composition for ink and use thereof.

### BACKGROUND

In recent years, inkjet printing has been widely used in electronic devices, display devices, color filters, commercial printing and other printing fields, since it can produce images easily and cheaply. Commonly used inkjet inks mainly include three categories: water-based inkjet inks, solvent-based inkjet inks, and active energy ray-curable inkjet inks. Most water-based inks are not waterproof without special oiling or lamination after printing and thus are rarely used. The main component of solvent-based inkjet inks is volatile organic compounds (VOCs), which are organic compounds with high vapor pressure. Although they are relatively widely used, they are not environmentally friendly. Among them, active energy ray-curable inks can form the desired pattern quickly in a non-contact manner, and are suitable for printing on a variety of recording media and thus are widely used.

Active energy ray-curable inkjet inks mainly include two categories: free radical polymerization inkjet inks using acrylic monomers and cationic polymerization inkjet inks using epoxy compounds. The free radical polymerization inkjet inks are widely used in practice due to their wide range of material selection, but they are greatly affected by oxygen inhibition, and the images obtained after ink curing have limited precision. The cationic polymerization inkjet inks are not hindered by oxygen and the colors remain long-lasting, but the monomer kind selections are limited, the image precision is relatively limited, and the nozzles are easily clogged during use.

CN114182545A, JP2007021740A, JP2003055563A, etc. report the uses of different cationic photocurable compositions. Although the problem of nozzle clogging has been solved to a certain extent, there is still no effective solution for high-precision nozzles.

### SUMMARY

The main purpose of the present invention is to provide a cationic photocurable composition for ink and use thereof, so as to solve the problem that the nozzles are easily clogged by the existing cationic photocurable compositions.

In order to achieve the above purpose, according to one aspect of the present invention, there is provided a cationic photocurable composition for ink, comprising: a cationic polymerizable compound, a cationic initiator, and a pigment, wherein the cationic polymerizable compound comprises Compound A-1 and Compound A-2; wherein Compound A-1 has the structural formula of 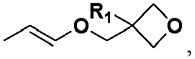 wherein R₁ represents methyl or ethyl; Compound A-2 is a polymerizable monomer without vinyl groups, which molecular weight is less than 300, and the molecular weight of oxygen in the molecule accounts for 12 % to 30 % of the molecular weight of the compound;
the sum of the contents of Compound A-1 and Compound A-2 accounts for 40 wt % to 90 wt % of the total content of the composition; and the weight ratio of Compound A-1 to Compound A-2 is from 8:1 to1:5.

Further, Compound A-2 includes any one or more selected from the following structures:

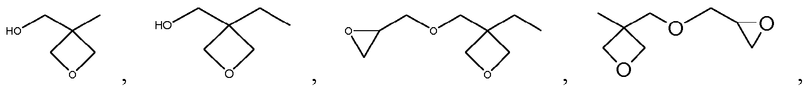

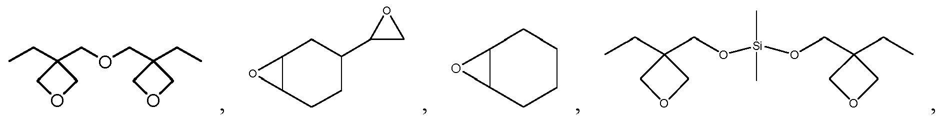

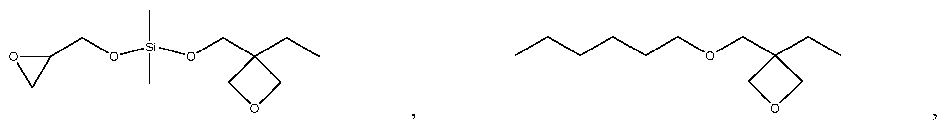

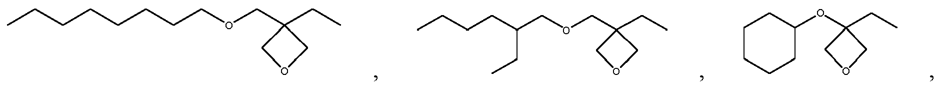

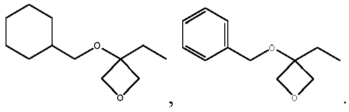

Further, the aforementioned cationic polymerizable compound further comprises a third cationic polymerizable compound, wherein the content of the third cationic polymerizable compound accounts for 0.1 wt % to 40 wt %, preferably 5 wt % to 30 wt % of the total content of the composition. Preferably, the third cationic polymerizable compound includes any one or more of alicyclic epoxy compounds, oxetane compounds, and vinyl ether compounds.

Further, the amount of the cationic initiator added accounts for 0.4 wt % to 20 wt % preferably 3 wt % to 10 wt % of the total amount of the composition,. The cationic initiator includes an iodonium salt photoinitiator and/or a sulfonium salt photoinitiator. Optionally, the aforementioned cationic initiator is selected from any one or more of diaryliodonium salts of sulfonic acid, triarylsulfonium salts of sulfonic acid, diaryliodonium salts of boric acid, and triarylsulfonium salts of boric acid.

Further, the pigment accounts for 0.5 wt % to 20 wt %, preferably 2 wt % to 15 wt % of the total amount of the composition. The pigment is an organic pigment and/or an inorganic pigment. The organic pigment is selected from any one or more of perylenes, phthalocyanine dyes, cyanine pigments, naphthalocyanine pigments, nitroso pigments, azo pigments, diazo pigments, diazo condensation pigments, basic dye pigments, basic blue pigments, indigo pigments, phloxin pigments, quinacridone pigments, isoindolinone pigments, dioxazine pigments, carbazole dioxazine violet pigments, alizarin lake pigments, phthaldiamide pigments, carmine lake pigments, tetrachloroisoindolinone pigments, perinone pigments, anthraquinone pigments, and quinophthalone pigments. The inorganic pigment is selected from any one or more of titanium oxides, iron oxides, aluminum oxides, silicon oxides, carbon black pigments, metal sulfides, and metal chlorides.

Further, the composition further comprises a sensitizer. The sensitizer has a content of 0.1 wt % to 15 wt %, preferably 3 wt % to 8 wt % in the composition. Preferably, the sensitizer is selected from any one or more of thioxanthone compounds, xanthone compounds, acridine compounds, anthracene compounds, and coumarin compounds. More preferably, the sensitizer is selected from any one or more of anthracene compounds and thioxanthone compounds.

Further, the sum of the contents of Compound A-1 and Compound A-2 accounts for 50 wt % to 90 wt % of the total content of the composition, and the ratio of Compound A-1 and Compound A-2 used is from 8:5 to 2:5.

Further, the composition further comprises an auxiliary. The auxiliary includes any one or more of levelling agents, dispersants, curing agents, surfactants, defoamers, and storage enhancers.

Further, the viscosity of the composition is less than 50 mPa·s. Preferably, the viscosity is 2 to 30 mPa·s.

According to another aspect of the present invention, there is provided use of any of the aforementioned compositions in an ink.

Further, a substrate used for the ink includes any of film, glass, and plastic. Preferably, the composition has a spraying thickness of 0.1 to 10 µm, more preferably 0.5 to 5 µm.

By applying the technical solution of the present invention, an ink with a relatively stable and suitable viscosity can be formed by adopting the cationic polymer combination with the specific structure. The researchers of the present invention accidentally discovered that adopting the cationic polymerizable compound with the aforementioned structure as the main component of the ink can effectively improve the problem that the nozzles are easily clogged by the cationic photocurable inks, and the effect is especially significant for the high-precision nozzles. Moreover, the pattern formed after the curing of the cationic photocurable composition for ink of the present invention is clear and uniform. It has a high curing speed and good adhesion, as well as an excellent appearance performance.

### DESCRIPTION OF EMBODIMENTS

It should be noted that, in the case of no conflict, the embodiments in the subject application as well as the features therein can be combined with each other. The invention will be described in detail below with reference to the embodiments.

As analyzed in the BACKGROUND of the subject application, there is a problem in the prior art that the nozzles are easily clogged by the cationic photocurable composition, especially for the high-precision nozzles. In order to solve this problem, there is provided a cationic photocurable composition for ink and use thereof.

According to a typical embodiment of the present invention, there is provided a cationic photocurable composition for ink, comprising: a cationic polymerizable compound, a cationic initiator, and a pigment, wherein the cationic polymerizable compound comprises any combination of Compound A-1 and Compound A-2; wherein Compound A-1 has the structural formula of 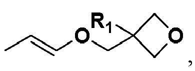 wherein R₁ represents methyl or ethyl; Compound A-2 is a polymerizable monomer without vinyl groups, which molecular weight is less than 300, and the molecular weight of oxygen in the molecule accounts for 12 % to 30 % of the molecular weight of the compound; the sum of the contents of Compound A-1 and Compound A-2 accounts for 40 wt % to 90 wt % of the total content of the composition; wherein, in the aforementioned composition, the weight ratio of Compound A-1 to Compound A-2 is from 8:1 to1:5.

In the present invention, an ink with a relatively stable and suitable viscosity can be formed by adopting the cationic polymer combination with the specific structure. The researchers of the present invention accidentally discovered that adopting the cationic polymerizable compound with the aforementioned structure as the main component of the ink can effectively improve the problem that the nozzles are easily clogged by the cationic photocurable inks, and the effect is especially significant for the high-precision nozzles. Moreover, the pattern formed after the curing of the cationic photocurable composition for ink of the present invention is clear and uniform. It has a high curing speed and good adhesion, as well as an excellent appearance performance.

The polymerizable monomer that meets the above conditions can be found in the prior art and applied in the cationic photocurable composition for ink of the present invention as Compound A-2. In some preferred embodiments of the present invention, the aforementioned Compound A-2 includes any one or more selected from the following structures:

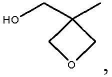

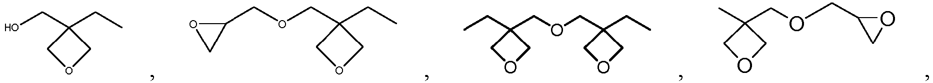

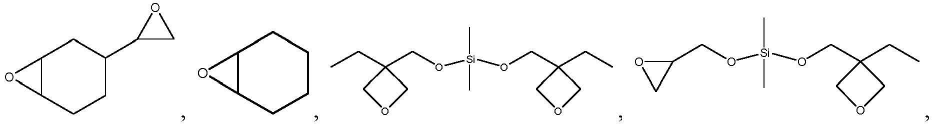

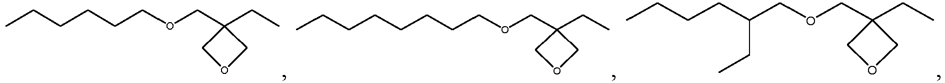

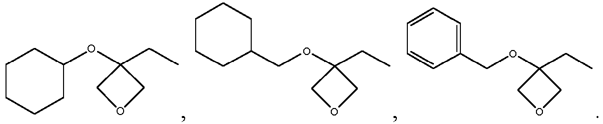

Illustratively, the aforementioned weight ratio of Compound A-1 to Compound A-2 is 8:1, 7:1, 6:1, 5:1, 4:1, 3:1, 2:1, 1:1, 1:2, 1:3, 1:4, 1:5, or any range therebetween. The sum of the contents of Compound A-1 and Compound A-2 accounts for any value in the range from 40 wt % to 90 wt %, such as 45 wt %, 50 wt %, 55 wt %, 60 wt %, 65 wt %, 70 wt %, 75 wt %, 80 wt %, 85 wt %, 90 wt %, or any range therebetween, of the total content of the composition.

In addition to Compound A-1 and Compound A-2, the aforementioned cationic polymerizable compound may also include other cationic polymerizable compounds in the prior art. In some embodiments of the present invention, other cationic polymerizable compounds are referred to as third cationic polymerizable compounds. The content of the third cationic polymerizable compound accounts for 0.1 wt % to 40 wt %, preferably 5 wt % to 30 wt %, such as 10 wt %, 15 wt %, 20 wt %, and 25 wt % of the total amount of the composition. By adding the third cationic polymerizable compound, the comprehensive performance of the cationic photocurable composition for ink can be further improved, to expand the range of application.

The third cationic polymerizable compound can be selected from the prior art, such as any one or more selected from alicyclic epoxy compounds, oxetane compounds, and vinyl ether compounds.

The aforementioned cationic polymerizable compound may also include a resin, such as acrylic resin and polyurethane resin, which may be selectively added as needed and is not limited herein.

The type and amount of the aforementioned cationic initiator can be selected from the prior art. In some preferred embodiments of the present invention, the amount of the cationic initiator added accounts for 0.4 wt % to 20 wt %, preferably 3 wt % to 10 wt % of the total amount of the composition, to further improve the curing performance. In some embodiments of the present invention, the cationic initiator includes an iodonium salt photoinitiator and/or a sulfonium salt photoinitiator, such as any one or more selected from diaryliodonium salts of sulfonic acid, triarylsulfonium salts of sulfonic acid, diaryliodonium salts of boric acid, and triarylsulfonium salts of boric acid.

The aforementioned cationic photoinitiator may list the following structures: bis(dodecylphenyl)iodonium hexafluoroarsenate, bis(dodecylphenyl)iodonium hexafluoroantimonate, dialkylphenyliodonium hexafluoroantimonate, diaryliodonium salts of perfluoroalkylsulfonic acid, diaryliodonium salts of perfluorobutanesulfonic acid, diaryliodonium salts of perfluoroethanesulfonic acid, diaryliodonium salts of perfluorococtanesulfonic acid, diaryliodonium salts of trifluoromethanesulfonic acid, diaryliodonium salts of paratoluenesulfonic acid, diaryliodonium salts of dodecylbenzenesulfonic acid, diaryliodonium salts of benzenesulfonic acid, diaryliodonium salts of 3-nitrobenzenesulfonic acid, triarylsulfonium salts of perfluorobutanesulfonic acid, triarylsulfonium salts of perfluoroethanesulfonic acid, triarylsulfonium salts of perfluorooctanesulfonic acid, triarylsulfonium salts of trifluoromethanesulfonic acid, triarylsulfonium salts of paratoluenesulfonic acid, triarylsulfonium salts of dodecylbenzenesulfonic acid, triarylsulfonium salts of benzenesulfonic acid, triarylsulfonium salts of 3-nitrobenzenesulfonic acid, diaryliodonium salts of perhalogenoarylboric acid, and triarylsulfonium salts of perhalogenoarylboric acid. One or more thereof can be selected and added to the composition, or one or more thereof can be selected and used simultaneously with other types of cationic photoinitiators.

The pigment in the cationic photocurable composition for ink of the present invention as the colorant is not particularly limited and can be selected from the prior art. In some embodiments of the present invention, the pigment accounts for 0.5 wt % to 20 wt %, such as 1.2 wt %, 1.8 wt %, 2.5 wt %, 3.5 wt %, 4.5 wt %, 5.5 wt %, 6.5 wt %, 7.5 wt %, 8.5 wt %, 10 wt %, 12 wt %, 14 wt %, 16 wt %, and 18 wt %, preferably 2 wt % to 15 wt %, of the total amount of the composition, which may give better consideration to both chromaticity and curing performance of the ink.

The aforementioned pigment may be in any color, such as black, blue, brown, cyan, green, white, purple, magenta, red, orange, and yellow, as well as a special color of a mixture thereof.

The pigment may be an organic pigment and/or an inorganic pigment. Illustratively, the organic pigment is selected from any one or more of perylenes, phthalocyanine dyes (e.g., phthalocyanine green, phthalocyanine blue), cyanine pigment (e.g., Cy3, Cy5, and Cy7), naphthalocyanine pigments, nitroso pigments, azo pigments, diazo pigments, diazo condensation pigments, basic dye pigments, basic blue pigments, indigo pigments, phloxin pigments, quinacridone pigments, isoindolinone pigments, dioxazine pigments, carbazole dioxazine violet pigments, alizarin lake pigments, phthaldiamide pigments, carmine lake pigments, tetrachloroisoindolinone pigments, perinone pigments, anthraquinone pigments, and quinophthalone pigments; and the inorganic pigment is selected from any one or more of titanium oxides (e.g., titanium dioxide, conductive titanium dioxide), iron oxides (e.g., red iron oxide, yellow iron oxide, black iron oxide, and transparent iron oxide), aluminum oxides, silicon oxides, carbon black pigments, metal sulfides, and metal chlorides.

In some embodiments of the present invention, the aforementioned composition further comprises a sensitizer, to further improve the photosensitivity of the composition, or to meet the requirements of photocuring under a long wavelength light source, especially a UV-LED light source. The content of the sensitizer in the cationic photocurable composition for ink is 0.1 wt % to 15 wt %, preferably 3 wt % to 8 wt %.

The sensitizer can be selected from any one or more of thioxanthone compounds, xanthone compounds, acridine compounds, anthracene compounds, and coumarin compounds. In some preferred embodiments of the present invention, the sensitizer is selected from any one or more of anthracene compounds and thioxanthone compounds, such as JRCure-1105(ITX) and JRCure-1106(DETX) produced by Tianjin Jiuri New Materials Co., LTD, and PSS303, PSS306, PSS506, PSS510, PSS513, PSS515, PSS402, PSS403, PSS603 produced by CHANGZHOU TRONLY NEW ELECTRONIC MATERIALS CO., LTD..

In some embodiments of the present invention, the sum of the contents of Compound A-1 and Compound A-2 in the aforementioned cationic photocurable composition for ink accounts for 50 wt % to 90 wt %, such as 55 wt %, 60 wt %, 65 wt %, 70 wt %, 75 wt %, 80 wt %, and 85 wt % of the total content of the composition. The weight ratio of Compound A-1 to Compound A-2 in the composition is from 8:5 to 2:5, such as 4:3, 1: 1, 2:3, and 1:2. The pattern formed after curing has better effects, and the probability of clogging the nozzles is further reduced, which is more suitable for inkjet printing of high-precision nozzles. Moreover, the researchers of the present invention found that the higher the content of Compound A-1 and Compound A-2 in the cationic photocurable composition for ink, the more stable the viscosity of the composition and the better the clogging resistance performance of the ink are. Meanwhile, the curing speed and the pattern appearance are relatively excellent.

According to the requirements of the product application environment, the cationic photocurable composition for ink of the present invention may also selectively incorporate organic and/or inorganic auxiliaries commonly used in the art, such as any one or more of levelling agents, dispersants, curing agents, surfactants, defoamers, and storage enhancers. The specific ingredients and amounts of the above auxiliaries can refer to the prior art and are not gone into too much detail here.

The viscosity of the cationic photocurable composition for ink of the present invention is not particularly limited. When the composition is formed into a coating by inkjet printing, the viscosity of the composition is generally appropriately 50 mPa·s or less, preferably 2 to 30 mPa·s, and more preferably 3 to 15 mPa·s. The viscosity of the composition of the present invention can be well controlled during storage, and no additional thickener or thinning agent is required.

For the cationic photocurable composition for ink of the present invention, the form of the initiating energy source is not particularly limited. Under the energy radiation such as ultraviolet light, visible light, infrared light, electron beam, laser, the polymerization reaction can occur and the rapid curing is achieved. Illustratively, the initiating energy source may be ultra-high pressure mercury lamp, high pressure mercury lamp, medium pressure mercury lamp, mercury xenon lamp, low pressure mercury lamp, metal halide lamp, xenon lamp, deuterium lamp, chemical lamp, LED lamp, fluorescent lamp, tungsten lamp, Nd-YAG triple wave laser, He-Cd laser, nitrogen laser, Xe-Cl excimer laser, Xe-F excimer laser, semiconductor excited solid laser, i-ray, h-ray, g-ray, and other active lights, with a wavelength of 200 to 500 nm. The energy curing by electron beam, α-ray, β-ray, γ-ray, X-ray and neutron ray, etc. can also be used in the curing of the composition. A UV mercury lamp or a UV-LED lamp with a wavelength range of 200 to 500 nm is preferable, wherein the radiation energy is preferably 20 to 1000 mJ/cm². When curing using a long wavelength energy source, it is preferred to add a sensitizer into the composition to improve the photosensitivity of the composition.

The components in the cationic photocurable composition for ink of the present invention are evenly mixed, to obtain a radiation curable inkjet ink. The specific preparation process can refer to those for the radiation curable compositions in the prior art. Typically, the preparation process includes: batching, pre-dispersing, grinding, and filtering (filtering through a filter screen having a specified size to obtain a product with a desired particle size) under the conditions of constant temperature and humidity and avoiding radiation light sources, i.e., to obtain an inkjet ink.

According to another typical embodiment of the present invention, there is provided use of any of the aforementioned cationic photocurable composition for ink in an ink.

Applying the cationic photocurable composition for ink of the present invention in an ink can effectively improve the problem that the nozzles are easily clogged by the cationic polymerizable inks, and the effect is especially significant for the high-precision nozzles. Moreover, the pattern formed after the curing of the cationic photocurable composition for ink of the present invention is clear and uniform, with strong adhesion and excellent appearance performances.

For the spray-coated pattern of the cationic photocurable composition for ink of the present invention, the thickness of the cured coating can be adjusted according to the prior art or according to the purpose of use. The thickness of the spray-coated pattern is preferably 0.1 to 10 µm, more preferably 0.5 to 5 µm, resulting in relatively uniform coating as formed and contributing to controlling the costs. This is because when the thickness of the ink coating is too small, the coating may not be formed uniformly, or it is difficult to accurately print according to the design; and when the thickness is too large, the coating may consume a large amount of printed ink thereby increasing costs, it is disadvantageous for uniform application, and the coating may become brittle and prone to delamination.

When the aforementioned cationic photocurable composition is used as an ink, its coating method can refer to the prior art without particular limitations. In addition to inkjet printing, other well-known methods can be used, such as dip coating, air knife coating, curtain coating, roller coating, die coating, wire rod coating, and the like.

When the aforementioned cationic photocurable composition is used as an ink, the substrate used is not particularly limited, such as film, glass, and plastic. The surface treatment such as corona treatment can be selectively performed according to the selected substrate material.

Hereinafter, the advantageous effects of the present invention will be further illustrated with reference to the examples and comparative examples.

### 1. Formulation of the ink

According to the formulations of the examples and comparative examples as shown in Table 1 and Table 2, the components in the formulations were stirred at a constant speed for 1 hour using a high-speed stirrer under a yellow light lamp condition, then ground using a sand grinder, and then filtered through a filter screen with a particle size of 1 µm, to obtain ink compositions. The quantities in each example and comparative example as shown in the tables are based on parts by weight.

**Table 1**

| Component | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|
| A-11 | 15 | 20 | | 30 | 15 | 35 | | 60 | | 80 | 15 | 15 | 25 |
| A-12 | | | 30 | | | | 50 | | 70 | | | | |
| A-21 | 35 | | 40 | | | 35 | | 25 | 15 | | 35 | 35 | 15 |
| A-22 | | 45 | | 60 | 75 | | 30 | | | 10 | | | |
| A-13 | | | | | | | | | | | | | |
| A-14 | | | | | | | | | | | | | |
| A-15 | | | | | | | | | | | | | |
| A-16 | | | | | | | | | | | | | |
| A-23 | | | | | | | | | | | | | |
| A-24 | | | | | | | | | | | | | |
| B1 | 37 | | 17 | | | 15 | | 5 | | | 32 | 37 | 47 |
| B2 | | 22 | | | | | 10 | | 5 | | | | |
| C1 | 5 | | 5 | | 3 | 5 | 4 | 5 | 5 | 3 | 5 | 5 | 5 |
| C2 | | 5 | | 5 | | | | | | | | | |
| D1 | 5 | | 5 | 2 | 4 | 5 | 5 | 2 | | | 5 | 5 | 5 |
| D2 | | 5 | | | | | | | 2 | 5 | | | |
| E | 3 | 3 | 3 | 3 | 3 | 5 | 3 | 3 | 3 | 2 | 8 | | 3 |

**Table 2**

| Component | Com. Ex. 1 | Com. Ex. 2 | Com. Ex. 3 | Com. Ex. 4 | Com. Ex. 5 | Com. Ex. 6 | Com. Ex. 7 | Com. Ex. 8 | Com. Ex. 9 |
|---|---|---|---|---|---|---|---|---|---|
| A-11 | 15 | 30 | | | | 20 | | | 30 |
| A-12 | | | 50 | | | | 50 | 30 | |
| A-21 | 20 | | 5 | 40 | 35 | | | | |
| A-22 | | 5 | | | | | | | |
| A-13 | | | | 30 | | | | | |
| A-14 | | | | | 35 | | | | |
| A-15 | | | | | | 45 | | | |
| A-16 | | | | | | | 30 | | |
| A23 | | | | | | | | 40 | |
| A24 | | | | | | | | | 60 |
| B1 | 52 | | | 17 | 15 | | | 17 | |
| B2 | | 52 | 35 | | | 22 | 10 | | |
| C1 | 5 | 5 | 5 | 5 | 5 | | 3 | 5 | |
| C2 | | | | | | 5 | | | 5 |
| D1 | 5 | 5 | | 5 | 5 | | 5 | 5 | 2 |
| D2 | | | 2 | | | 5 | | | |
| E | 3 | 3 | 3 | 3 | 5 | 3 | 2 | 3 | 3 |

The components represented by the letters in the tables are specifically as follows: wherein A11 to A16 are compounds represented by Compound A-1 or similar compounds, A21 to A24 are compounds represented by Compound A-2 or similar compounds, B1 and B2 are the third cationic polymerizable compounds, C1 and C2 are cationic initiators, D1 and D2 are pigments, and E is a sensitizer.
A-11: 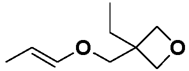 (homemade in accordance with the synthesis method disclosed in JP1995017958A);
A-12: 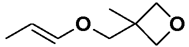 (homemade in accordance with the synthesis method disclosed in JP1995017958A);
A-21: 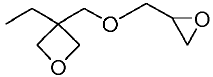 (homemade in accordance with the synthesis method disclosed in US3452054A);
A-22: 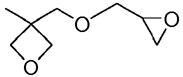 (homemade in accordance with the synthesis method disclosed in JP3047800B2);
A-13: 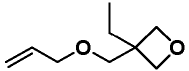 (homemade in accordance with the synthesis method disclosed in JP2000063522A);
A-14: 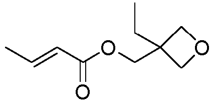 (homemade in accordance with the synthesis method disclosed in JP1999315181A);
A-15: 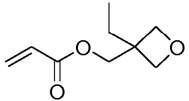 (homemade in accordance with the synthesis method disclosed in US3105838A);
A-16: 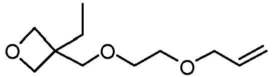 (product code: THM209-1);
A-23: 4,4-bis[(3-ethyl-3 oxetane)methoxymethyl]biphenyl (cas: 358365-48-7);
A-24: 3-hydroxy-3-hydroxymethyloxetane (cas: 16563-93-2);
B1: poly[(2-oxiranyl)-1,2-cyclohexanediol] 2-ethyl-2-(hydroxymethyl)-1,3-propylene glycol ether (3:1) (product code: TTA3150);
B2: 4,4-bis[(3-ethyl-3 oxetane)methoxymethyl]biphenyl (CHANGZHOU TRONLY NEW ELECTRONIC MATERIALS CO., LTD.);
C1: bis(dodecylphenyl)iodonium hexafluoroantimonate (CHANGZHOU TRONLY NEW ELECTRONIC MATERIALS CO., LTD.);
C2: triphenylsulfonium hexafluorophosphate (CHANGZHOU TRONLY NEW ELECTRONIC MATERIALS CO., LTD.);
D1: inorganic carbon black (Clariant Chemicals (China) Ltd.);
D2: titanium dioxide (Shanghai Shucan Industrial Co. Ltd.);
E: 2-ethylanthracene-9,10-di(3-cyclohexylpropionate) (product code: PSS506).

### 2. Ink curing and drying speed test

The ink to be tested in each example and comparative example was printed using Sotech solvent-free inkjet printer (model: A380), wherein an LED lamp with a wavelength of 395 nm was added to the machine as a radiation light source. The ink to be tested was transferred to a PET film (common industrial film FP2, Lucky Group Corporation) by the inkjet printer, wherein the printing thickness was set to 5 µm, and the LED light source power was 20 w/cm².

After the light exposure, it was left for 24 hours, and the surface curing status was evaluated according to the finger touch method in the paint film drying time test standard GB/T 1728-1979, that is, touching the coating lightly with the finger, and confirming the surface dryness by smooth and non-sticky surface without fingerprints when pressed. The drying speed was expressed as the maximum linear speed that achieves the surface drying effect, in m/min, and the test results are shown in Table 3. The curing and drying speed can reflect the activity of the composition. The greater the curing and drying speed, the faster the curing speed and the higher the activity of the composition are.

### 3. Evaluations on the adhesion fastness of the cured ink coating and the printed product appearance

The linear speeds on the inkjet printer (Inside) were set to 220 m/min and 150 m/min, respectively. The PET film (JPC-P1-125) was used as the substrate, the printing thickness was set to 5 µm, and the irradiation energy of the 395 nm LED light source was 20 mJ/cm². After exposure, it was left for 24 hours, and the basic performances such as the adhesion fastness of the cured coating and the printed product appearance were evaluated, and the evaluation results are shown in Table 3.

### (1) Coating adhesion test

According to "GB/T9286-1998 Scratch Test of Paint and Varnish Film", the adhesion on the substrate was tested by cross-cut (hundred-grid scratching knife) method using QFH paint film grid-scratching instrument. The specific procedure was as follows:
The knife tool that complies with "GB/T9286-1998 Scratch Test of Paint and Varnish Film" was used to cut on the coating surface, to ensure that the scratching reaches the substrate surface each time. The coating surface was cleaned with a soft brush, a tape was applied on the coating such that the tape was in full contact with the coating, and the tape was finally torn from the coating surface, to evaluate the results. The criterions were as follows, and the specific evaluation results are shown in Table 3.
Level 0: The cut edge was completely smooth without one grid falling off;
Level 1: There was a little coating peeling off at the intersection of incisions, with the affected cross-cut areas of not significantly greater than 5 %;
Level 2: There was coating peeling off at the intersection of incisions and/or along the edge of incisions, with the affected cross-cut areas of significantly greater than 5 % but not significantly greater than 15 %;
Level 3: The coating was partially or completely peeled off in large fragments along the cut edge, and/or partially or completely peeled off on different parts of the grids, with the affected cross-cut areas of significantly greater than 15 % but not significantly greater than 35 %;
Level 4: The coating was peeled off in large fragments along the cut edge, and/or some grids were partially or completely peeled off, with the affected cross-cut areas of significantly greater than 35 % but not significantly greater than 65 %;
Level 5: The degree for peeling off exceeded Level 4.

### (2) Evaluation on printed product appearance

In accordance with GB/T 7707-2008 inkjet decoration printing standards, the inkjet printing with a depth of 10-18 µm was used. The printed product after being left for 24 hours was placed under the light source for sample viewing as specified in CY/T 3, to identify by visual inspection. The printed product was neat, without obvious ink stains, defects, and knife lines; the text printing was clear and complete, without defects and deformation, and the characters smaller than 7.5P did not affect reading; the full point printing had smooth printing edges and uniform ink color, without obvious watermarks; the printing showed smooth transition, without obvious gradation skips; the dots were clear and uniform, without obvious deformation and defects; the printing hue met the requirements for the printing sample, i.e., it was considered being qualified. Otherwise, it was recorded as disqualified if any item was undesired.

### (3) Evaluation of clogging resistance

The nozzles used in the experiment are: Nozzle A, Model KJ4A-0300 (4PL, 112.35mm); and Nozzle B, Model G5I (3.5PL, 10-15 mm).

The two nozzles were respectively observed for the use of the inks of Examples and Comparative Examples in the case of operation and in the case of no operation at early stage, in accordance with the following evaluation procedures:
① In the case of operation:
According to the above experimental formulations, a 3×3 cm quadrilateral test pattern was recorded side by side in the vertical and horizontal direction on the PET film (JPC-P1-125), and each test pattern was recorded with an interval of 3 cm. After continuous recording for 2 hours, the basic conditions of nozzle arrays (Nozzle A: 1328 holes of KJ4A-0300; and Nozzle B: 1280 holes of G5I) were checked. The criterions were as follows:
A: No nozzles that did not spray;
B: Nozzles that did not spray were less than 2 %;
C: Nozzles that did not spray exceeded 2 % but were less than 5 %;
D: Nozzles that did not spray exceeded 5 %.

② In the case of no operation at early stage:
According to the above experimental formulations, the inks of Examples and Comparative Examples were loaded into the nozzles of different models, and the viscosity changes of the compositions after being placed for 8 hours and 48 hours were recorded respectively. After the compositions were placed for 48 hours, the operation was carried out, then after continuous recording for 2 hours, the conditions of Nozzles A and B were observed. The criterions were as follows:
A: No nozzles that did not spray;
B: Nozzles that did not spray were less than 2 %;
C: Nozzles that did not spray exceeded 2 % but were less than 5 %;
D: Nozzles that did not spray exceeded 5 %.

**Table 3**

| | Curing and drying speed /m/min | Adhesion /Grade | Appearance | In the case of operation | | In the case of no operation at early stage | | | |
|---|---|---|---|---|---|---|---|---|---|
| | | | | Nozzle A | Nozzle B | 8h (mPa·s) | 48h (mPa·s) | Nozzle A | Nozzle B |
| Ex. 1 | 220 | 0 | qualified | A | A | 11.3 | 15.4 | A | A |
| Ex. 2 | 225 | 0 | qualified | A | A | 9.7 | 11.2 | A | A |
| Ex. 3 | 230 | 0 | qualified | A | A | 8.3 | 10.9 | A | A |
| Ex. 4 | 240 | 0 | qualified | A | A | 6.5 | 8.2 | A | A |
| Ex. 5 | 235 | 0 | qualified | A | A | 7.0 | 8.6 | A | A |
| Ex. 6 | 225 | 0 | qualified | A | A | 8.0 | 11.2 | A | A |
| Ex. 7 | 220 | 0 | qualified | A | A | 7.3 | 9. | A | A |
| Ex. 8 | 235 | 0 | qualified | A | A | 4.5 | 5.8 | A | A |
| Ex. 9 | 230 | 0 | qualified | A | A | 4.1 | 5.5 | A | A |
| Ex. 10 | 225 | 0 | qualified | A | A | 3.6 | 4.7 | A | A |
| Ex. 11 | 220 | 0 | qualified | A | A | 12.6 | 16.5 | A | A |
| Ex. 12 | 205 | 0 | qualified | A | A | 10.4 | 13.2 | A | A |
| Ex. 13 | 200 | 1 | qualified | A | B | 12.8 | 16.4 | A | A |
| Com. Ex. 1 | 200 | 1 | qualified | A | c | 17.6 | 19.3 | B | B |
| Com. Ex. 2 | 190 | 1 | unqualified | A | c | 14.4 | 15.6 | B | B |
| Com. Ex. 3 | 195 | 0 | unqualified | A | B | 12.6 | 15.5 | A | A |
| Com. Ex. 4 | <150 | 5 | unqualified | A | B | 11.5 | 11.6 | A | A |
| Com. Ex. 5 | <150 | 5 | unqualified | A | D | 10.9 | 17.9 | B | c |
| Com. Ex. 6 | <150 | 5 | unqualified | A | D | 10.5 | 10.9 | B | c |
| Com. Ex. 7 | 200 | 0 | unqualified | A | B | 9.3 | 11.7 | A | A |
| Com. Ex. 8 | 210 | 1 | unqualified | A | A | 9.1 | 10.3 | A | B |
| Com. Ex. 9 | <150 | 5 | unqualified | c | D | 22.3 | 23.5 | D | D |

It can be seen from the performance evaluation results in Table 3 that, the cationic photocurable composition of the present invention has excellent curing performance. The viscosity is essentially not affected by long-term placement. The nozzle will not be clogged regardless of continuous operation or intermittent operation, and the effect is especially significant for the high-precision nozzle applications. The present invention has good application prospects.

It can be seen from the aforementioned descriptions that, the above examples of the present invention achieve the following technical effects: applying the cationic photocurable composition for ink of the present invention in an ink can effectively improve the problem that the nozzles are easily clogged by the cationic polymerizable inks, and the effect is especially significant for the high-precision nozzles. Moreover, the pattern formed after the curing of the cationic photocurable composition for ink of the present invention is clear and uniform, with strong adhesion and excellent appearance performances.

The above descriptions are merely preferred embodiments of the present invention and are not intended to limit the present invention. For those skilled in the art, the present invention may have various modifications and changes. Any modification, equivalent replacement, and improvement made within the spirit and principle of the invention shall be included within the scope of the invention.

## Claims

1. A cationic photocurable composition for ink, **characterized in** comprising: a cationic polymerizable compound, a cationic initiator, and a pigment, wherein the cationic polymerizable compound comprises Compound A-1 and Compound A-2;
wherein Compound A-1 has the structural formula of 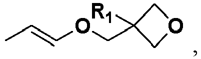 wherein R₁ represents methyl or ethyl;
Compound A-2 is a polymerizable monomer without vinyl groups, which molecular weight is less than 300, and the molecular weight of oxygen in the molecule accounts for 12 % to 30 % of the molecular weight of the compound;
the sum of the contents of Compound A-1 and Compound A-2 accounts for 40 wt % to 90 wt % of the total content of the composition; and
the weight ratio of Compound A-1 to Compound A-2 is from 8:1 to 1:5.

2. The composition according to claim 1, **characterized in that**, Compound A-2 includes any one or more selected from the following structures:

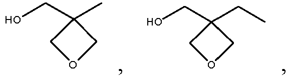

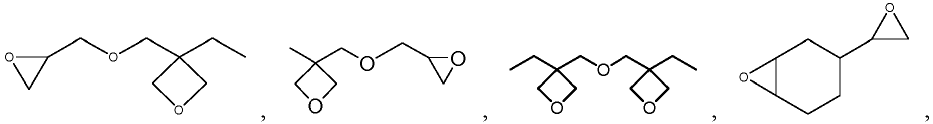

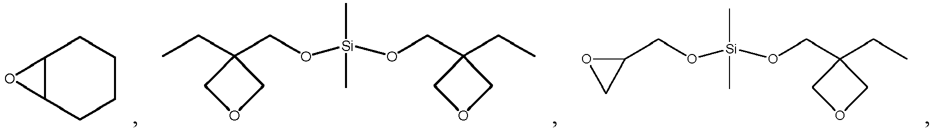

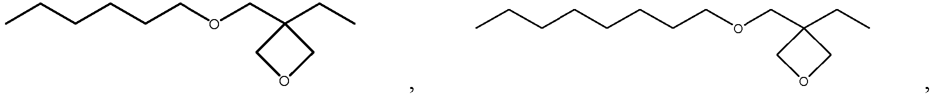

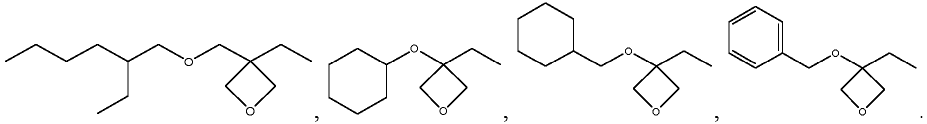

3. The composition according to claim 1, **characterized in that**, the cationic polymerizable compound further comprises a third cationic polymerizable compound, wherein the content of the third cationic polymerizable compound accounts for 0.1 wt % to 40 wt %, preferably 5 wt % to 30 wt % of the total content of the composition;
preferably, the third cationic polymerizable compound includes any one or more of alicyclic epoxy compounds, oxetane compounds, and vinyl ether compounds.

4. The composition according to claim 1, **characterized in that**, the amount of the cationic initiator added accounts for 0.4 wt % to 20 wt %, preferably 3 wt % to 10 wt % of the total amount of the composition, wherein the cationic initiator includes an iodonium salt photoinitiator and/or a sulfonium salt photoinitiator;
optionally, the cationic initiator is selected from any one or more of diaryliodonium salts of sulfonic acid, triarylsulfonium salts of sulfonic acid, diaryliodonium salts of boric acid, and triarylsulfonium salts of boric acid.

5. The composition according to claim 1, **characterized in that**, the pigment accounts for 0.5 wt % to 20 wt %, preferably 2 wt % to 15 wt %. of the total amount of the composition, wherein the pigment is an organic pigment and/or an inorganic pigment;
the organic pigment is selected from any one or more of perylenes, phthalocyanine dyes, cyanine pigments, naphthalocyanine pigments, nitroso pigments, azo pigments, diazo pigments, diazo condensation pigments, basic dye pigments, basic blue pigments, indigo pigments, phloxin pigments, quinacridone pigments, isoindolinone pigments, dioxazine pigments, carbazole dioxazine violet pigments, alizarin lake pigments, phthaldiamide pigments, carmine lake pigments, tetrachloroisoindolinone pigments, perinone pigments, anthraquinone pigments, and quinophthalone pigments;
the inorganic pigment is selected from any one or more of titanium oxides, iron oxides, aluminum oxides, silicon oxides, carbon black pigments, metal sulfides, and metal chlorides.

6. The composition according to claim 1, **characterized in that**, the composition further comprises a sensitizer, wherein the sensitizer has a content of 0.1 wt % to 15 wt %, preferably 3 wt % to 8 wt % in the composition;
preferably, the sensitizer is selected from any one or more of thioxanthone compounds, xanthone compounds, acridine compounds, anthracene compounds, and coumarin compounds; more preferably, the sensitizer is selected from any one or more of anthracene compounds and thioxanthone compounds.

7. The composition according to any of claims 1 to 6, **characterized in that**, the sum of the contents of Compound A-1 and Compound A-2 accounts for 50 wt % to 90 wt % of the total content of the composition, and the ratio of Compound A-1 and Compound A-2 used is from 8:5 to 2:5.

8. The composition according to any of claims 1 to 6, **characterized in that**, the composition further comprises an auxiliary, and the auxiliary includes any one or more of levelling agents, dispersants, curing agents, surfactants, defoamers, and storage enhancers.

9. The composition according to any of claims 1 to 6, **characterized in that**, the viscosity of the composition is less than 50 mPa·s; preferably, the viscosity is 2 to 30 mPa·s.

10. Use of the composition according to any of claims 1 to 9 in an ink.

11. The use according to claim 10, **characterized in that**, a substrate used for the ink includes any of film, glass, and plastic;
preferably, the composition has a spraying thickness of 0.1 to 10 µm, more preferably 0.5 to 5 µm.
